# EUROPÄISCHE PATENTSCHRIFT

(11) **EP 1 643 782 B1**
(45) Veröffentlichungstag und Bekanntmachung des Hinweises auf die Patenterteilung: **23.03.2011**
(21) Anmeldenummer: 05020029.4
(22) Anmeldetag: 14.09.2005
(51) Int. Cl.: H04W 8/24

(54) **Verfahren zum Bereitstellen von ein Mobilfunkgerät in einem Mobilfunknetzwerk identifizierenden Geräteidentifikationen in dem Mobilfunkgerät**
Method for providing device identifications in a mobile device for identifying said mobile device in a mobile network
Procédé pour fournir des identifications de dispositif dans un dispositif mobile pour reconnaitre ledit dispositif mobile dans un réseau mobile

(30) Priorität: 01.10.2004 DE 102004048345
(43) Veröffentlichungstag der Anmeldung: 05.04.2006
(73) Patentinhaber: Teles AG Informationstechnologien, 10587 Berlin (DE)
(72) Erfinder: Paetsch, Frank, 12357 Berlin (DE)
(74) Vertreter: Müller, Wolfram Hubertus

(56) Entgegenhaltungen:
- EP-A- 1 441 552
- WO-A-03/061203
- DE-A1- 10 311 980
- US-A1- 2003 142 642

## Beschreibung

Die Erfindung betrifft ein Verfahren zum Bereitstellen von ein Mobilfunkgerät in einem Mobilfunknetzwerk identifizierenden Geräteidentifikationen in dem Mobilfunkgerät, eine Telekommunikationsanordnung zum Durchführen des Verfahrens sowie ein Mobilfunkgerät zur Verwendung in einem solchen Verfahren.

### Hintergrund der Erfindung

Es ist bekannt, Mobilfunkgeräte mit einer eindeutigen Geräte- oder Seriennummer zu versehen, die bei den gegenwärtig genutzten Standards für Mobilfunknetze auch als IMEI (IMEI - "International Mobile Equipment Identity") bezeichnet wird. Die IMEI ist der von den aktuell genutzten GSM-Netzwerken (GSM - "Global System for Mobile Communication") fünfzehnstelliger Code, der genutzt wird, um ein zugehöriges Mobilfunkgerät in einem Mobilfunknetzwerk eindeutig zu identifizieren. Üblicherweise kann die IMEI auch über eine Anzeige des Mobilfunkgerätes angezeigt werden, indem ein vorgegebener Code über das Tastenfeld des Mobilfunkgerätes eingegeben wird. Darüber hinaus ist bei den meisten Mobilfunkgeräten die IMEI im Geräteinneren aufgedruckt, vorzugsweise im Bereich der Batterie, sofern es sich um ein mobiles Endgerät mit Batterieversorgung handelt.

In dem Dokument WO 03/061203 A1 ist ein Verfahren beschrieben zum Übergeben von Nachrichten in Verbindung mit einer temporären MAC-Adresse in einem drahtlosen lokalen Netzwerk (WLAN). In Abhängigkeit von gewünschten Dienstleistungen werden temporäre MAC-Adressen für die Datenübertragung erzeugt und vergeben.

Das Dokument US 2003/0142642 A1 beschreibt ein Verfahren, bei dem in einem drahtlosen Kommunikationsnetzwerk auf Basis des Internetprotokolls (IP) IP-Adressen für mobile Geräte innerhalb des drahtlosen IP-Netzwerkes zugeordnet und validiert werden. Die zugeordneten IP-Adressen umfassen eine Orts- und eine Identitätskomponente.

Das Dokument DE 103 11 980 A1 offenbart ein Verfahren zum Bereitstellen einer mit einer Kennung versehenen Einsteckkarte in einem Mobilfunkendgerät, wobei durch die Einsteckkarte eine Zuordnung und Anmeldung des Mobilfunkgerätes zu bzw. bei einem Mobilfunknetz erfolgt. In einem zentralen Computer werden eine Mehrzahl von Einsteckkarten zentral verwaltet und bereitgestellt, und die Identifikationsdaten einer Einsteckkarte sowie gegebenenfalls Authentifizierungsdaten werden auf eine Aufforderung durch das Mobilfunkendgerät per Datenübertragung an das Mobilfunkendgerät übertragen und auf diese Weise bei diesem bereitgestellt.

### Aufgabe der Erfindung

Der Erfindung liegt die Aufgabe zu Grunde, ein Verfahren zum Bereitstellen von ein Mobilfunkgerät in einem Mobilfunknetzwerk identifizierenden Geräteidentifikationen in dem Mobilfunkgerät zur Verfügung zu stellen, bei dem die Möglichkeiten zur flexiblen Nutzung von Mobilfunkgeräten in dem Mobilfunknetzwerk erweitert sind. Darüber hinaus sollen eine Telekommunikationsanordnung zum Durchführen des Verfahrens sowie ein Mobilfunkgerät zur Verwendung bei dem Verfahren angegeben werden.

### Zusammenfassung der Erfindung

Diese Aufgabe wird erfindungsgemäß durch ein Verfahren mit den Merkmalen des Anspruchs 1 und eine Telekommunikationsanordnung mit den Merkmalen des Anspruchs 11 sowie ein Mobilfunkgerät nach einem Anspruch 18 gelöst. Bevorzugte und vorteilhafte Ausgestaltungen der Erfindung sind Gegenstand von abhängigen Unteransprüchen.

Die Erfindung sieht ein Verfahren zum Bereitstellen von ein Mobilfunkgerät in einem Mobilfunknetzwerk identifizierenden Geräteidentifikationen in dem Mobilfunkgerät vor, wobei in einem Verwaltungs- und Zuordnungssystem mehrere Geräteidentifikationen verwaltet werden, eine erste Geräteidentifikation aus den mehreren Geräteidentifikationen in dem Verwaltungs- und Zuordnungssystem ausgewählt und von dem Verwaltungs- und Zuordnungssystem an ein Funkmodul in dem Mobilfunkgerät übertragen wird und die erste Geräteidentifikation in dem Funkmodul gespeichert wird, so daß die erste Geräteidentifikation für eine Identifizierung des Mobilfunkgerätes in dem Mobilfunknetzwerk bereitgestellt ist.

Mit Hilfe des Verwaltungs- und Zuordnungssystems werden des Weiteren mit einer Nutzerkennung versehene Einsteckkarten verwaltet und wird eine der mehreren mit einer Nutzerkennung versehenen Einsteckkarten in dem Mobilfunkgerät bereitgestellt, indem Identifizierungsdaten der Einsteckkarte sowie ggf. Authentifizierungsdaten von einer zentralen Servereinrichtung an das Mobilfunkgerät übertragen werden.

Das Bereitstellen der ersten Geräteidentifikation im Mobilfunkgerät erfolgt dynamisch in dem Sinne, dass die erste Geräteidentifikation nur temporär in dem Mobilfunkgerät bereitgestellt und durch das Verwaltungs- und Zuordnungssystem zu einem weiteren Mobilfunkgerät weitergereicht wird. Dabei wird die erste Geräteidentifikation in einem Funkmodul des weiteren Mobilfunkgeräts gespeichert, so dass die erste Geräteidentifikation nun für eine Identifizierung des weiteren Mobilfunkgerätes in dem Mobilfunknetzwerk bereitgestellt ist.

Die mit der Nutzerkennung versehene Einsteckkarte und die erste Geräteidentifikation werden erfindungsgemäß durch das Verwaltungs- und Zuordnungssystem gemeinsam dynamisch zugeordnet, indem sie als Paar zwischen Mobilfunkgeräten weitergereicht werden.

So ist es ermöglicht, in dem Mobilfunkgerät sowohl die Geräteidentifikation als auch eine Nutzerkennung flexibel zuzuordnen. Bei der Nutzerkennung handelt es sich gemäss dem aktuellen Standard um eine IMSI (IMSI - "International Mobile Subscriber Identity"). Die IMSI ist eine weltweit eindeutige Kennung, die den Teilnehmer (Vertragspartner eines Mobilfunknetzbetreibers) eindeutig identifiziert. Die IMSI ist üblicherweise auf einer Chipkarte (SIM - "Subscriber Identity Module") gespeichert, die ein Mobilfunkteilnehmer bei Abschluss eines Vertrages erhält. Die ersten Ziffern des IMSI-Codes bezeichnen den Netzbetreiber; anhand der weiteren Ziffern kann über die beim Netzbetreiber gespeicherten Bestandsdaten der Mobilfunkteilnehmer ermittelt werden. Mit Hilfe der IMSI kann nicht nur die Identität des Teilnehmers, sondern auch dessen Mobilfunk-Telefonnummer bestimmt werden, wozu ebenfalls ein Zugriff auf die Bestandsdaten des Netzbetreibers erforderlich ist.

Die Erfindung beruht auf dem Gedanken, eine Menge von Geräteidentifikationen, die in dem Mobilfunknetzwerk zur Identifizierung von Mobilfunkgeräten genutzt werden, mit Hilfe eines Verwaltungs- und Zuordnungssystems zu verwalten und je nach Situation eine erste Geräteidentifikation auszuwählen und in einem Mobilfunkgerät bereitzustellen, so dass sich dieses Mobilfunkgerät in dem Mobilfunknetzwerk mittels der bereitgestellten Geräteidentifikation identifizieren kann. Mit Hilfe einer solchen dynamischen Zuordnung der Geräteidentifikation ist eine kostengünstige und mit geringem Aufwand durchführbare Möglichkeit zur dynamischen Vergabe von Geräteidentifikationen geschaffen. Unabhängig vom aktuellen Ort eines Mobilfunkgerätes in dem Mobilfunknetzwerk kann dem Mobilfunkgerät eine gewünschte Geräteidentifikation zugewiesen werden. Das Verwaltungs- und Zuordnungssystems kann entweder als ein lokales System in dem Mobilfunkgerät selbst oder in einer zentralen Servereinrichtung implementiert werden, bei der es sich vorzugsweise um einen zentralen Computer handelt. Im Fall der zentralen Servereinrichtung wird die erste Geräteidentifikation dann von der zentralen Servereinrichtung an das Mobilfunkgerät übertragen.

Die Übertragung der Geräteidentifikation von der zentralen Servereinrichtung an das Mobilfunkgerät kann unabhängig von dem Mobilfunknetzwerk erfolgen, was jedoch voraussetzt, dass zwischen dem Mobilfunkgerät und dem zentralen System eine zur Datenübertragung geeignete Verbindung ausgebildet ist, beispielsweise mittels eines Netzwerkes, des Telefonfestnetzes oder Radio- oder Fernsehsignalen. Bei dem Netzwerk kann es sich zum Beispiel um das Internet handeln.

Bei dem Mobilfunkgerät, in dem die Geräteidentifikation bereitgestellt wird, kann es sich sowohl um ein mobiles Endgerät als auch um ein stationäres Mobilfunkgerät handeln, welches über ein Funkmodul verfügt. Ein stationäres Mobilfunkgerät ist beispielsweise ein Mobilfunk-Gateway wie es in dem Dokument DE 102 60 401 A1 beschrieben ist. Bei dem mobilen Endgerät handelt es sich zum Beispiel um ein übliches Mobilfunktelefon.

Eine zweckmässige Ausgestaltung der Erfindung sieht vor, dass durch die erste Geräteidentifikation eine vorhergehende Geräteidentifikation in dem Funkmodul ersetzt wird. Auf diese Weise ist es möglich, in dem Mobilfunkgerät mehrfach eine geänderte Geräteidentifikation bereitzustellen.

Alternativ kann bei einer Fortbildung der Erfindung vorgesehen sein, dass die erste Geräteidentifikation als anwendungsbezogene weitere Geräteidentifikation neben einer vorhandenen Geräteidentifikation in dem Mobilfunkgerät bereitgestellt wird. Die anwendungsbezogene weitere Geräteidentifikation wird in dem Mobilfunkgerät hierbei zweckmässig einem weiteren Funkmodul zugeordnet. Hierdurch ist es ermöglicht, ein Mobilfunkgerät mit mehreren Geräteidentifikationen dynamisch auszustatten, so dass das Mobilfunkgerät in dem Mobilfunknetzwerk mittels mehrerer Geräteidentifikationen agieren kann. Dieses kann beispielsweise in Verbindung mit dem Testen des Mobilfunknetzwerkes oder dem Simulieren des Verhaltens des Mobilfunkgerätes bei der Nutzung desselben durch Benutzer zweckmässig sein.

Die anwendungsbezogene weitere Geräteidentifikation kann nach einer vorgegebenen Zeit verfallen. Dieses bedeutet, dass sie nicht länger von dem Mobilfunkgerät zur Geräteidentifizierung in dem Mobilfunknetzwerk nutzbar ist. Der Verfall kann beispielsweise dadurch realisiert werden, dass beim Zugriff auf die anwendungsbezogene weitere Geräteidentifikation stets eine Überprüfung dahingehend stattfindet, ob die Geräteidentifikation noch gültig ist, was mit Hilfe eines zeitlich begrenzten Gültigkeitsvermerks sichergestellt werden kann, der seinerseits beim Zugriff auf die gespeicherte Geräteidentifikation geprüft wird.

Die Simulation der Bewegung eines Mobilfunkgerätes durch das Mobilfunknetzwerk ist bei einer Weiterbildung der Erfindung dadurch ermöglicht, dass die Bereitstellung der ersten Geräteidentifikation für die Identifikation des Mobilfunkgerätes in dem Mobilfunknetzwerk auf eine vorbestimmte Zeit begrenzt wird, die erste Geräteidentifikation von dem Verwaltungs- und Zuordnungssystem an ein anderes Mobilfunkgerät per Datenübertragung übertragen wird und die erste Geräteidentifikation in einer Speichereinrichtung des anderen Mobilfunkgeräts abrufbar gespeichert wird, so dass die erste Geräteidentifikation für eine Identifizierung des anderen Mobilfunkgeräts in dem Mobilfunknetzwerk bereitgestellt ist.

### Beschreibung von bevorzugten Ausführungsbeispielen

Die Erfindung wird im folgenden anhand von Ausführungsbeispielen unter Bezugnahme auf die Figuren der Zeichnungen näher erläutert. Hierbei zeigen:
- Fig. 1: eine schematische Blockdarstellung eines Mobilfunkgerätes;
- Fig. 2: eine schematische Darstellung einer Telekommunikationsanordnung mit einem zentralen System zum Verwalten von mehreren Geräteidentifikationen und mit mehreren Mobilfunkgeräten.

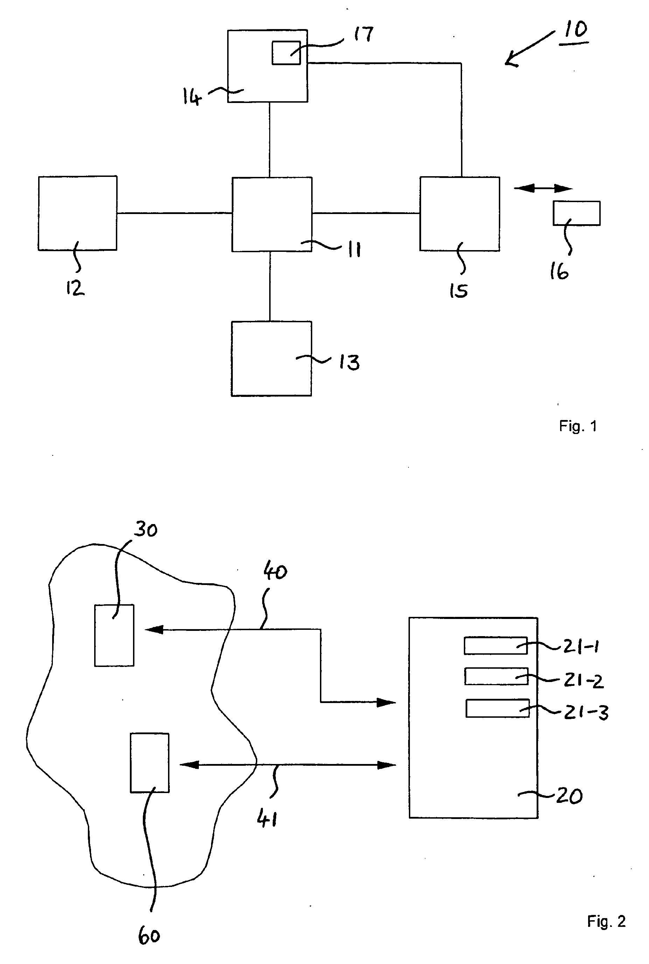

Anhand der Fig. 1 und 2 wird nachfolgend ein Verfahren zum Bereitstellen von ein Mobilfunkgerät in einem Mobilfunknetzwerk identifizierenden Geräteidentifikationen in dem Mobilfunkgerät erläutert. Bei der Geräteidentifikation handelt es sich, wie in der derzeitigen Mobilfunkkommunikation üblich, um die IMEI (IMEI - "International Mobile Equipment Identitiy"), die eingangs erläutert wurde.

Fig. 1 zeigt eine schematische Darstellung für ein Ausfuhrungsbeispiel eines Mobilfunkgerätes 10. Neben einer zentralen Steuereinheit CPU 11 mit einem zugeordneten Speicher 12 sind eine Eingabe-/Ausgabeeinheit 13, ein Funkmodul 14 und eine SIM-Kartenleseeinrichtung 15 vorgesehen, die alle mit der zentralen Steuereinheit 11 verbunden sind. In die SIM-Kartenleseeinrichtung 15 kann eine SIM-Karte 16 lösbar eingesteckt werden. Bei dem Funkmodul 14 handelt es sich entsprechend dem im Mobilfunkbereich gegenwärtig vorherrschenden Standard um ein GSM-Modul (GSM - "Global System for Mobile Communication"), welches auch als GSM-Enginge bezeichnet wird. Das GSM-Modul 14 sendet und empfängt Funkdaten auf einem Nutzkanal eines Mobilfunknetzes.

Fig. 2 zeigt eine schematische Darstellung einer Telekommunikationsanordnung mit einem zentralen System 20, welches ein Verwaltungs- und Zuordnungssystem zum Verwalten und Zuordnen mehrerer Geräteidentifikationen 21-1, 21-2, 21-3 umfaßt und bei dem es sich vorzugsweise um einen Computer handelt, sowie einem Mobilfunkgerät 30 und einem weiteren Mobilfunkgerät 60, die über Datenleitungen 40, 41 miteinander verbunden sind. Mit dem zentralen System 20 werden die mehreren Geräteidentifikationen 21-1, 21-2, 21-3 verwaltet. Dem gegenwärtig aktuellen Standard entsprechend handelt es sich bei den Geräteidentifikationen 21-1 bis 21-3 um IMEI's. Soll nun in dem Mobilfunkgerät 30 eine Geräteidentifikation bereitgestellt werden, so daß das Mobilfunkgerät 30 sich in einem Mobilfunknetzwerk 50 identifizieren kann, wird in dem zentralen System 20 eine der verwalteten Geräteidentifikationen 21-1 bis 21-3 ausgewählt und über die Datenleitung 40 an das Mobilfunkgerät 30 übertragen.

Das Mobilfunkgerät 30 weist einen konstruktiven Aufbau auf, wie er beispielhaft in Fig. 1 gezeigt ist. Über die Eingabe-/Ausgabeeinheit 13 wird die Geräteidentifikation von dem zentralen System 20 empfangen und an die zentrale Steuereinheit 11 übergeben. Die zentrale Steuereinheit 11 verfügt über Zuordnungsmittel, so daß die empfangene Geräteidentifikation dem Funkmodul 14 zugeordnet wird. In dem Funkmodul 14 wird die von der zentralen Steuereinheit 11 zugeordnete Geräteidentifikation in einem Funkmodulspeicher 17 abrufbar abgelegt, so daß die Geräteidentifikation für eine Identifizierung des Mobilfunkgerätes 30 in dem Mobilfunknetz 50 zur Verfügung steht.

Die beschriebene Bereitstellung einer Geräteidentifikation mit Hilfe des zentralen Systems 20 kann insbesondere zum Testen von Mobilfunknetzen genutzt werden. Unabhängig vom aktuellen Standort des Mobilfunkgerätes 30 kann in diesem eine Geräteidentifikation bereitgestellt werden, die es dem Mobilfunkgerät 30 ermöglicht, sich direkt oder unter Einbeziehung anderer Mobilfunknetze (sog. "Roaming") in dem Mobilfunknetz 50 zu identifizieren und somit übliche Funktionalitäten eines Mobilfunkgerätes auszuführen. Auf diese Weise kann beispielsweise auch das Verhalten von Mobilfunkteilnehmern in Mobilfunknetzen simuliert werden. Die flexible Zuordnung einer Geräteidentifikation ermöglicht es, eine Bewegung des Mobilfunkgerätes 30 in dem Mobilfunknetz 50 zu simulieren, indem die Geräteidentifikation mittels dynamischer Zuordnung weitergereicht wird.

Das beschriebene Verfahren zur flexiblen Bereitstellung einer Geräteidentifikation in einem Mobilfunkgerät kann in Kombination mit einer dynamischen Bereitstellung einer Nutzerkennung in dem Mobilfunkgerät verwendet werden. Ein solches Verfahren ist ausführlich in der deutschen Patentanmeldung 103 11 980.9 beschrieben, weshalb es hier keiner näheren Erläuterung bedarf. Die Verwaltung der dynamisch zuordbaren Nutzerkennungen, bei der es sich bei dem aktuellen Standard entsprechend um die sogenannte IMSI (IMSI - "International Mobile Subscriber Identity") handelt, erfolgt bevorzugt durch das zentrale System 20. In diesem Fall erfüllt das zentrale System 20 zusätzlich die Funktion eines zentralen SIM-Servers, wobei die auf Anforderung in dem Mobilfunkgerät 30 bereitgestellte Nutzerkennung ebenfalls über die Datenleitung 40 von dem zentralen System 20 an das Mobilfunkgerät 30 übertragen wird. Auf diese Weise kann auch eine Nutzerkennung zwischen Mobilfunkgeräten weitergereicht werden, so daß insbesondere eine bestimmte Geräteidentifikation und eine bestimmte Nutzerkennung als Paar dynamisch zugeordnet werden können, insbesondere zu Simulations-, Test- oder Wartungszwecken.

Es kann vorgesehen sein, daß die in dem Mobilfunkgerät 30 gemäß dem oben beschriebenen Verfahren zur Verfügung gestellte Geräteidentifikation nur für einen vorbestimmte Zeitdauer in dem Mobilfunkgerät 30 bereitgestellt wird und anschließend zur weiteren Nutzung an das weitere Mobilfunkgerät 60 übertragen wird, so daß die Geräteidentifikation dann in dem weiteren Mobilfunkgerät 60 zur Nutzung bereitgestellt ist.

In einer bevorzugten Ausgestaltung ist vorgesehen, daß das als Verwaltungs- und Zuordnungssystem gebildete zentrale System zur flexiblen Bereitstellung einer aktuellen Geräteidentifikation und / oder zur dynamischen Bereitstellung einer aktuellen Nutzerkennung als ein lokales System ausgeführt ist, welches in ein zugehöriges Mobilfunkgerät integriert ist. Das lokale System übernimmt, in analoger Weise wie dies für das zentrale System erläutert wurde, die Verwaltung und die dynamische Zuordnung der aktuellen Geräteidentifikation und / oder die aktuelle Nutzerkennung für das zugehörige Mobilfunkgerät, in welchem es implementiert ist. Hierzu ist in dem Mobilfunkgerät zweckmäßig eine Verwaltungs- und Zuordnungseinheit gebildet. Auf diese Weise kann das lokale System ein oder mehrere Funkmodule in dem zugehörigen Mobilfunkgerät mit einer zugeordneten Geräteidentifikation versorgen. Das lokale System wirkt dem gegenwärtigen Standard entsprechend als ein SIM- und / oder ein IMEI-Server für das zugehörige Mobilfunkgerät. Ein solches lokales System kann beispielsweise in einem Mobilfunkgerät implementiert werden, wie es in einer möglichen Ausführungsform in Fig. 1 schematisch dargestellt ist.

Es kann auch vorgesehen sein, daß die Bereitstellung mehrerer Geräteidentifikationen mit Hilfe des lokalen Systems in dem zugehörigen Mobilfunkgerät und die Bereitstellung der mehreren Nutzerkennungen mittels des zentralen Systems, welches getrennt von den Mobilfunkgeräten gebildet ist, erfolgt oder umgekehrt. Auf diese Weise können beispielsweise sehr verschiedene Simulationen des Verhaltens von Mobilfunkteilnehmern durchgeführt werden, indem insbesondere eine flexible Zuordnung von Geräteidentifikationen lokal im Mobilfunkgerät initiiert und ausgeführt werden, wohingegen Nutzerkennungen zentral ausgewählt und nach Datenfernübertragung in einem bestimmten Mobilfunkgerät bereitgestellt werden.

Die kombinierte dynamische Bereitstellung von Geräteidentifikation und Nutzerkennung erlaubt ein hohes Maß an Flexibilität für die Nutzung von Mobilfunkgeräten sowohl im Rahmen der Nutzung der Mobilfunkgeräte durch Mobilfunkteilnehmer als auch im Zusammenhang mit der Wartung und Testung mit Mobilfunknetzen und den darin genutzten Mobilfunkgeräten.

In der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Bereitstellen von ein Mobilfunkgerät (10; 30; 60) in einem Mobilfunknetzwerk (50) identifizierenden Geräteidentifikationen in dem Mobilfunkgerät (10; 30; 60), bei dem von einem Verwaltungs- und Zuordnungssystem mehrere mit einer Nutzerkennung versehene Einsteckkarten verwaltet werden und eine der mehreren mit einer Nutzerkennung versehenen Einsteckkarten in dem Mobilfunkgerät (10; 30; 60) bereitgestellt wird, indem Identifizierungsdaten der Einsteckkarte sowie ggf. Authentifizierungsdaten von einer zentralen Servereinrichtung an das Mobilfunkgerät (10; 30; 60) übertragen werden, wobei das Verfahren **gekennzeichnet ist durch** die folgenden Schritte:
- Verwalten von mehreren Geräteidentifikationen (21-1, 21-2, 21-3) mit dem Verwaltungs- und Zuordnungssystem;
- Auswählen einer ersten Geräteidentifikation aus den mehreren Geräteidentifikationen (21-1, 21-2, 21-3) in dem Verwaltungs- und Zuordnungssystem;
- Übertragen der ersten Geräteidentifikation von dem Verwaltungs- und Zuordnungssystem an ein Funkmodul (14) in dem Mobilfunkgerät (10; 30); und
- Speichern der ersten Geräteidentifikation in dem Funkmodul (14), so dass die erste Geräteidentifikation für eine Identifizierung des Mobilfunkgerätes (10; 30) in dem Mobilfunknetzwerk (50) bereitgestellt ist,
- wobei das Bereitstellen der ersten Geräteidentifikation im Mobilfunkgerät (10; 30) dynamisch in dem Sinne erfolgt, dass die erste Geräteidentifikation nur temporär in dem Mobilfunkgerät (10; 30) bereitgestellt und **durch** das Verwaltungs- und Zuordnungssystem zu einem weiteren Mobilfunkgerät (60) weitergereicht wird,
- wobei die erste Geräteidentifikation in einem Funkmodul (14) des weiteren Mobilfunkgeräts (60) gespeichert wird, so dass die erste Geräteidentifikation nun für eine Identifizierung des weiteren Mobilfunkgerätes (60) in dem Mobilfunknetzwerk (50) bereitgestellt ist, und
- wobei die mit der Nutzerkennung versehene Einsteckkarte und die erste Geräteidentifikation **durch** das Verwaltungs- und Zuordnungssystem gemeinsam dynamisch zugeordnet werden, indem sie als Paar zwischen Mobilfunkgeräten (10, 30, 60) weitergereicht werden.

2. Verfahren nach Anspruch 1, **dadurch gekennzeichnet, dass** durch die erste Geräteidentifikation eine vorhergehende Geräteidentifikation in dem Funkmodul (14) ersetzt wird.

3. Verfahren nach Anspruch 1 oder 2, **dadurch gekennzeichnet, dass** das Verwaltungs- und Zuordnungssystem in der zentralen Servereinrichtung (20) gebildet ist und die erste Geräteidentifikation nach dem Auswählen von der zentralen Servereineinrichtung (20) per Datenfernübertragung an das Mobilfunkgerät (10; 30; 60) übertragen wird.

4. Verfahren nach Anspruch 3, **dadurch gekennzeichnet, dass** die Datenfernübertragung an das Mobilfunkgerät (10; 30; 60) über ein Netzwerk oder das Telefonfestnetz oder Radio- oder Femsehsignale oder ein Mobilfunknetz erfolgt.

5. Verfahren nach Anspruch 1 oder 2, **dadurch gekennzeichnet, dass** das Verwaltungs- und Zuordnungssystem als ein lokales System in dem Mobilfunkgerät (10; 30; 60) gebildet ist und die erste Geräteidentifikation nach dem Auswählen innerhalb des Mobilfunkgerätes (10; 30; 60) von dem lokalen System an das Funkmodul (14) übertragen wird.

6. Verfahren nach mindestens einem der vorangehenden Ansprüche, **dadurch gekennzeichnet, dass** die erste Geräteidentifikation als anwendungsbezogene weitere Geräteidentifikation neben einer vorhandenen Geräteidentifikation in dem Mobilfunkgerät (10; 30; 60) bereitgestellt wird.

7. Verfahren nach mindestens einem der vorangehenden Ansprüche, **dadurch gekennzeichnet, dass** die erste Geräteidentifikation nach einer vorgegebenen Zeit verfällt.

8. Verfahren nach mindestens einem der vorangehenden Ansprüche, **dadurch gekennzeichnet, dass** die erste Geräteidentifikation in einem als stationäres Mobilfunkgerät ausgeführten Mobilfunkgerät bereitgestellt wird.

9. Verfahren nach mindestens einem der vorangehenden Ansprüche**dadurch gekennzeichnet, dass** die erste Geräteidentifikation in einem als mobiles Endgerät ausgeführten Mobilfunkgerät bereitgestellt wird.

10. Verfahren nach mindestens einem der vorangehenden Ansprüche, **dadurch gekennzeichnet, dass** die Bereitstellung der ersten Geräteidentifikation für die Identifikation des Mobilfunkgerätes (10; 30) in dem Mobilfunknetzwerk (50) auf eine vorbestimmte Zeit begrenzt und die erste Geräteidentifikation von dem Verwaltungs- und Zuordnungssystem an das weitere Mobilfunkgerät (60) per Datenfernübertragung übertragen wird.

11. Telekommunikationsanordnung zum Durchführen des Verfahrens nach Anspruch 1, mit mehreren Mobilfunkgeräten (10; 30; 60) und einem Verwaltungs- und Zuordnungssystem, welches konfiguriert ist, um mehrere mit einer Nutzerkennung versehene Einsteckkarten zu verwalten und eine der mehreren mit einer Nutzerkennung versehenen Einsteckkarten in einem Mobilfunkgerät (10; 30; 60) bereitzustellen, indem Identifizierungsdaten der Einsteckkarte sowie ggf. Authentifizierungsdaten von einer zentralen Servereinrichtung an das Mobilfunkgerät (10; 30; 60) übertragen werden, **dadurch gekennzeichnet, dass** das Verwaltungs- und Zuordnungssystem weiterhin konfiguriert ist,
- um mehrere Geräteidentifikationen (21-1, 21-2, 21-3) zu verwalten und Mobilfunkgeräten (10; 30; 60) temporär bereitzustellen,
- eine erste Geräteidentifikation aus den mehreren Geräteidentifikationen auszuwählen und an ein Funkmodul (14) eines der Mobilfunkgeräte (10; 30) zu übertragen, wobei das Mobilfunkgerät (10; 30) konfiguriert ist, um die erste Geräteidentifikation nach dem Übertragen an das Funkmodul (14) zur Geräteidentifizierung in einem Mobilfunknetzwerk (50) zu nutzen,
- die erste Geräteidentifikation anschließend an ein Funkmodul (14) eines weiteren der Mobilfunkgeräte (60) zu übertragen, wobei das weitere Mobilfunkgerät (60) konfiguriert ist, um die erste Geräteidentifikation nach dem Übertragen an das Funkmodul (14) zur Geräteidentifizierung in einem Mobilfunknetzwerk (50) zu nutzen, und
- eine mit der Nutzerkennung versehene Einsteckkarte und die erste Geräteidentifikation gemeinsam als Paar dynamisch zwischen den Mobilfunkgeräten (10: 30; 60) weiterzureichen.

12. Telekommunikationsanordnung nach Anspruch 11, **dadurch gekennzeichnet, dass** das Mobilfunkgerät (10; 30; 60) eine vorhandene Geräteidentifikation aufweist und die erste Geräteidentifikation als anwendungsbezogene weitere Geräteidentifikation für eine anwendungsbezogene Identifikation in dem Mobilfunknetz (50) nutzt.

13. Telekommunikationsanordnung nach Anspruch 11 oder 12, **dadurch gekennzeichnet, dass** das Mobilfunkgerät (10; 30; 60) ein mobiles Endgerät ist.

14. Telekommunikationsanordnung nach Anspruch 11 oder 12, **dadurch gekennzeichnet, dass** das Mobilfunkgerät ein stationäres Mobilfunkgerät ist.

15. Telekommunikationsanordnung nach mindestens einem der Ansprüche 11 bis 14, **dadurch gekennzeichnet, dass** das Mobilfunkgerät (10; 30; 60) mehrere Funkmodule umfasst.

16. Telekommunikationsanordnung nach mindestens einem der Ansprüche 11 bis 15, **dadurch gekennzeichnet, dass** das Verwaltungs- und Zuordnungssystem in dem Mobilfunkgerät (10; 30; 60) gebildet ist.

17. Telekommunikationsanordnung nach mindestens einem der Ansprüche 11 bis 15, **dadurch gekennzeichnet, dass** das Verwaltungs- und Zuordnungssystem in einer zentralen Servereinrichtung (20) gebildet ist.

18. Mobilfunkgerät (10; 30; 60) zur Verwendung in dem Verfahren nach Anspruch 1, **gekennzeichnet durch**
- Kommunikationsmittel (13) zum Kommunizieren mit einem Verwaltungs- und Zuordnungssystem, welches konfiguriert ist, um mehrere mit einer Nutzerkennung versehene Einsteckkarten sowie mehrere Geräteidentifikationen (21-1, 21-2, 21-3) zu verwalten und für eine wahlweise Nutzung bereitzustellen,
- Empfangsmittel, die von den Kommunikationsmitteln (13) umfasst sind, zum Empfangen einer mit einer Nutzerkennung versehenen Einsteckkarte einer ersten Geräteidentifikation von dem Verwaltungs- und Zuordnungssystem, und
- Zuordnungsmittel zum Zuordnen der empfangenen ersten Geräteidentifikation zu einem Funkmodul (14), so dass die erste Geräteidentifikation für eine Identifizierung des Mobilfunkgerätes (10; 30; 60) in einem Mobilfunknetzwerk (50) bereitgestellt ist wobei das
- Kommunikationsmittel (13) weitergehend dazu konfiguriert ist, ein Weiterreichen der ersten Geräteidentifikation zusammen mit der mit einer Nutzerkennung versehenen Einsteckkarte als Paar **durch** das Verwaltungs- und Zuordnungssystem zu einem weiteren Mobilfunkgerät (60) zu erlauben.

19. Mobilfunkgerät (10; 30; 60) nach Anspruch 18, **gekennzeichnet durch** ein weiteres Funkmodul, dem eine weitere Geräteidentifikation mit Hilfe der Zuordnungsmittel zugeordnet ist.

## Claims

1. A method for providing device identifications in a mobile device (10; 30; 60) for identifying the mobile device (10; 30; 60) in a mobile network (50), in which a plurality of plug-in cards provided with a user ID are administered by an administration and allocation system and one of the plurality of plug-in cards provided with a user ID is provided in the mobile device (10; 30; 60), in that identification data of the plug-in card and possibly authentification data are transmitted from a central server means to the mobile device (10; 30; 60), wherein the method is **characterized by** the following steps:
- administering a plurality of device identifications (21-1, 21-2, 21-3) with the administration and allocation system;
- selecting a first device identification from the plurality of device identifications (21-1, 21-2, 21-3) in the administration and allocation system;
- transmitting the first device identification from the administration and allocation system to a radio module (14) in the mobile device (10; 30); and
- storing the first device identification in the radio module (14), so that the first device identification is provided for identifying the mobile device (10; 30) in the mobile network (50),
- wherein providing the first device identification in the mobile device (10; 30) is effected dynamically in the sense that the first device identification is provided only temporarily in the mobile device (10; 30) and handed over by the administration and allocation system to a further mobile device (60),
- wherein the first device identification is stored in a radio module (14) of the further mobile device (60), so that the first device identification only is provided for identifying the further mobile device (60) in the mobile network (50), and
- wherein the plug-in card provided with the user ID and the first device identification together are dynamically allocated by the administration and allocation system, in that they are handed over as pair between mobile devices (10, 30, 60).

2. The method according to claim 1, **characterized in that** the first device identification replaces a preceding device identification in the radio module (14).

3. The method according to claim 1 or 2, **characterized in that** the administration and allocation system is formed in the central server means (20) and after being selected the first device identification is transmitted by remote data transmission from the central server means (20) to the mobile device (10; 30; 60).

4. The method according to claim 3, **characterized in that** the remote data transmission is effected to the mobile device (10; 30; 60) via a network or the fixed telephone network or radio or television signals or a mobile network.

5. The method according to claim 1 or 2, **characterized in that** the administration and allocation system is formed as a local system in the mobile device (10; 30; 60) and after being selected inside the mobile device (10; 30; 60) the first device identification is transmitted from the local system to the radio module (14).

6. The method according to at least one of the preceding claims, **characterized in that** the first device identification is provided as an application-related further device identification beside an existing device identification in the mobile device (10; 30; 60).

7. The method according to at least one of the preceding claims, **characterized in that** the first device identification expires after a predetermined period.

8. The method according to at least one of the preceding claims, **characterized in that** the first device identification is provided in a mobile device configured as a stationary mobile device.

9. The method according to at least one of the preceding claims, **characterized in that** the first device identification is provided in a mobile device configured as a mobile terminal device.

10. The method according to at least one of the preceding claims, **characterized in that** providing the first device identification for identifying the mobile device (10; 30) in the mobile network is limited to a predetermined period and the first device identification is transmitted by remote data transmission from the administration and allocation system to the further mobile device (60).

11. A telecommunication arrangement for carrying out the method according to claim 1, comprising a plurality of mobile devices (10; 30; 60) and an administration and allocation system which is configured to administer a plurality of plug-in cards provided with a user ID and to provide one of the plurality of plug-in cards provided with a user ID in a mobile device (10; 30; 60), in that idenfitication data of the plug-in card and possibly authentification data are transmitted from a central server means to the mobile device (10; 30; 60), **characterized in that** the administration and allocation system furthermore is configured to
- administer a plurality of device identifications (21-1, 21-2, 21-3) and temporarily provide mobile devices (10; 30; 60),
- select a first device identification from the plurality of device identifications and transmit the same to a radio module (14) of one of the mobile devices (10; 30), wherein the mobile device (10; 30) is configured to utilize the first device identification after transmission to the radio module (14) for device identification in a mobile network (50),
- subsequently transmit the first device identification to a radio module (14) of a further one of the mobile devices (60), wherein the further mobile device (60) is configured to utilize the first device identification after transmission to the radio module (14) for device identification in a mobile network (50), and
- dynamically hand over a plug-in card provided with the user ID and the first device identification together as pair between the mobile devices (10; 30; 60).

12. The telecommunication arrangement according to claim 11, **characterized in that** the mobile device (10; 30; 60) includes an existing device identification and utilizes the first device identification as an application-related further device identification for an application-related identification in the mobile network (50).

13. The telecommunication arrangement according to claim 11 or 12, **characterized in that** the mobile device (10; 30; 60) is a mobile terminal device.

14. The telecommunication arrangement according to claim 11 or 12, **characterized in that** the mobile device is a stationary mobile device.

15. The telecommunication arrangement according to at least one of claims 11 to 14, **characterized in that** the mobile device (10; 30; 60) comprises a plurality of radio modules.

16. The telecommunication arrangement according to at least one of claims 11 to 15, **characterized in that** the administration and allocation system is formed in the mobile device (10; 30; 60).

17. The telecommunication arrangement according to at least one of claims 11 to 15, **characterized in that** the administration and allocation system is formed in a central server means (20).

18. A mobile device (10; 30; 60) for use in the method according to claim 1, **characterized by**
- communication means (13) for communicating with an administration and allocation system which is configured to administer a plurality of plug-in cards provided with a user ID and a plurality of device identifications (21-1, 21-2, 21-3) and provide the same for a selective utilization,
- receiving means, which are comprised by the communication means (13), for receiving a plug-in card provided with a user ID of a first device identification from the administration and allocation system, and
- allocating means for allocating the received first device identification to a radio module (14), so that the first device identification is provided for identifying the mobile device (10; 30; 60) in a mobile network (50), wherein the
- communication means (13) furthermore is configured to allow a hand-over of the first device identification together with the plug-in card provided with a user ID as pair by the administration and allocation system to a further mobile device (60).

19. The mobile device (10; 30; 60) according to claim 18, **characterized by** a further radio module to which a further device identification is allocated by means of the allocation means.

## Revendications

1. Procédé pour fournir des identifications de dispositif dans un dispositif mobile pour reconnaître ledit dispositif mobile (10 ; 30 ; 60) dans un réseau mobile (50) dans le dispositif mobile (10 ; 30 ; 60), pour lequel plusieurs cartes enfichables pourvues d'un identifiant d'utilisateur sont gérées par un système de gestion et d'association et l'une des plusieurs cartes enfichables pourvues d'un identifiant d'utilisateur étant fournie dans le dispositif mobile (10 ; 30 ; 60) en ce que des données d'identification de la carte enfichable ainsi qu'éventuellement des données d'authentification sont transmises par un dispositif serveur central au dispositif mobile (10 ; 30 ; 60), le procédé étant **caractérisé par** les étapes suivantes :
- la gestion de plusieurs identifications de dispositif (21-1, 21-2, 21-3) avec le système de gestion et d'association ;
- la sélection d'une première identification de dispositif parmi les plusieurs identifications de dispositif (21-1, 21-2, 21-3) dans le système de gestion et d'association ;
- la transmission de la première identification de dispositif du système de gestion et d'association à un module radio (14) dans le dispositif mobile (10 ; 30) ; et
- l'enregistrement de la première identification de dispositif dans le module radio (14) de sorte que la première identification de dispositif pour une identification du dispositif mobile (10 ; 30) soit fournie dans le réseau mobile (50),
- la fourniture de la première identification de dispositif dans le dispositif mobile (10 ; 30) étant effectuée dynamiquement au sens que la première identification de dispositif n'est fournie que temporairement dans le dispositif mobile (10 ; 30) et est transférée par le système de gestion et d'association vers un autre dispositif mobile (60),
- la première identification de dispositif étant enregistrée dans un module radio (14) de l'autre dispositif mobile (60) de sorte que la première identification de dispositif soit fournie maintenant pour une identification de l'autre dispositif mobile (60) dans le réseau mobile (50), et
- la carte enfichable pourvue de l'identifiant d'utilisateur et la première identification de dispositif étant associées ensemble dynamiquement par le système de gestion et d'association en les transférant comme paire entre des dispositifs mobiles (10, 30, 60).

2. Procédé selon la revendication 1, **caractérisé en ce qu'**une identification de dispositif précédente dans le module radio (14) est remplacée par la première identification de dispositif.

3. Procédé selon la revendication 1 ou 2, **caractérisé en ce que** le système de gestion et d'association est formé dans le dispositif serveur central (20) et la première identification de dispositif est transmise après la sélection du dispositif serveur central (20) par télétransmission des données au dispositif mobile (10 ; 30 ; 60).

4. Procédé selon la revendication 3, **caractérisé en ce que** la télétransmission des données au dispositif mobile (10 ; 30 ; 60) est effectuée par un réseau ou le réseau téléphonique à lignes fixes ou des signaux radios ou de télévision ou un réseau mobile.

5. Procédé selon la revendication 1 ou 2, **caractérisé en ce que** le système de gestion et d'association est formé comme un système local dans le dispositif mobile (10 ; 30 ; 60) et la première identification de dispositif est transmise après la sélection dans le dispositif mobile (10 ; 30 ; 60) par le système local au module radio (14).

6. Procédé selon au moins l'une quelconque des revendications précédentes, **caractérisé en ce que** la première identification de dispositif est fournie, comme autre identification de dispositif orientée vers l'application, outre une identification de dispositif présente dans le dispositif mobile (10 ; 30 ; 60).

7. Procédé selon au moins l'une quelconque des revendications précédentes, **caractérisé en ce que** la première identification de dispositif expire après une durée prescrite.

8. Procédé selon au moins l'une quelconque des revendications précédentes, **caractérisé en ce que** la première identification de dispositif est fournie dans un dispositif mobile réalisé comme dispositif mobile stationnaire.

9. Procédé selon au moins l'une quelconque des revendications précédentes, **caractérisé en ce que** la première identification de dispositif est fournie dans un dispositif mobile réalisé comme un terminal mobile.

10. Procédé selon au moins l'une quelconque des revendications précédentes, **caractérisé en ce que** la fourniture de la première identification de dispositif pour l'identification du dispositif mobile (10 ; 30) dans le réseau mobile (50) est limitée à une durée prédéterminée et la première identification de dispositif est transmise par le système de gestion et d'association à l'autre dispositif mobile (60) par télétransmission des données.

11. Ensemble de télécommunication pour la réalisation du procédé selon la revendication 1, avec plusieurs dispositifs mobiles (10 ; 30 ; 60) et un système de gestion et d'association qui est configuré afin de gérer plusieurs cartes enfichables pourvues d'un identifiant d'utilisateur et de fournir l'une des plusieurs cartes enfichables pourvues d'un identifiant d'utilisateur dans un dispositif mobile (10 ; 30 ; 60) en ce que des données d'identification de la carte enfichable ainsi qu'éventuellement des données d'identification sont transmises par un dispositif de serveur central au dispositif mobile (10 ; 30 ; 60), **caractérisé en ce que** le système de gestion et d'association est en outre configuré afin de :
- gérer plusieurs identifications de dispositif (21-1, 21-2, 21-3) et de fournir temporairement des dispositifs mobiles (10 ; 30 ; 60),
- sélectionner une première identification de dispositif parmi les plusieurs identifications de dispositif et de la transmettre à un module radio (14) de l'un des dispositifs radio (10 ; 30), le dispositif radio (10 ; 30) étant configuré afin d'utiliser la première identification de dispositif après la transmission au module radio (14) pour l'identification du dispositif dans un réseau mobile (50),
- transmettre ensuite la première identification de dispositif à un module radio (14) d'un autre des dispositifs mobiles (60), l'autre dispositif mobile (60) étant configuré afin d'utiliser la première identification de dispositif après la transmission au module radio (14) pour l'identification du dispositif dans un réseau mobile (50), et
- transférer dynamiquement une carte enfichable pourvue de l'identifiant d'utilisateur et la première identification de dispositif ensemble comme paire entre les dispositifs mobiles (10 ; 60 ; 60).

12. Ensemble de télécommunication selon la revendication 11, **caractérisé en ce que** le dispositif mobile (10 ; 30 ; 60) présente une identification de dispositif existante et utilise la première identification de dispositif comme autre identification de dispositif orientée vers l'application pour une identification orientée vers l'application dans le réseau mobile (50).

13. Ensemble de télécommunication selon la revendication 11 ou 12, **caractérisé en ce que** le dispositif mobile (10 ; 30 ; 60) est un terminal mobile.

14. Ensemble de télécommunication selon la revendication 11 ou 12, **caractérisé en ce que** le dispositif mobile est un dispositif mobile stationnaire.

15. Ensemble de télécommunication selon au moins l'une quelconque des revendications 11 à 14, **caractérisé en ce que** le dispositif mobile (10 ; 30 ; 60) comporte plusieurs modules radio.

16. Ensemble de télécommunication selon au moins l'une quelconque des revendications 11 à 15, **caractérisé en ce que** le système de gestion et d'association est formé dans le dispositif mobile (10 ; 30 ; 60).

17. Ensemble de télécommunication selon au moins l'une quelconque des revendications 11 à 15, **caractérisé en ce que** le système de gestion et d'association est formé dans un dispositif de serveur central (20).

18. Dispositif mobile (10 ; 30 ; 60) destiné à être utilisé dans le procédé selon la revendication 1, **caractérisé par**
- un moyen de communication (13) pour la communication avec un système de gestion et d'association, qui est configuré afin de gérer plusieurs cartes enfichables pourvues d'un identifiant d'utilisateur ainsi que plusieurs identifications de dispositif (21-1, 21-2, 21-3) et de les fournir pour une utilisation au choix,
- des moyens de réception qui sont compris par les moyens de communication (13) pour la réception d'une carte enfichable pourvue d'un identifiant d'utilisateur d'une première identification de dispositif par le système de gestion et d'association, et
- des moyens d'association pour l'association de la première identification de dispositif reçue à un module radio (14) de sorte que la première identification de dispositif soit fournie pour une identification du dispositif mobile (10 ; 30 ; 60) dans un réseau mobile (50),
- le moyen de communication (13) étant configuré en outre afin de permettre un transfert de la première identification de dispositif conjointement avec la carte enfichable pourvue d'un identifiant d'utilisateur comme paire par le système de gestion et d'association à un autre appareil mobile (60).

19. Dispositif mobile (10 ; 30 ; 60) selon la revendication 18, **caractérisé par** un autre module radio, auquel est associée une autre identification de dispositif à l'aide des moyens d'association.
